# EUROPÄISCHE PATENTSCHRIFT

(11) **EP 1 590 930 B1**
(45) Veröffentlichungstag und Bekanntmachung des Hinweises auf die Patenterteilung: **01.12.2010**
(21) Anmeldenummer: 04705142.0
(22) Anmeldetag: 26.01.2004
(51) Int. Cl.: H04L 12/56

(54) **Kommunikationsnetz und Verfahren zur Daten Übertragung in einem Kommunikationsnetz**
Communications network and method for transmitting data in a communications network
Réseau de communication et procédé de transmission de données dans un réseau de communication

(30) Priorität: 03.02.2003 DE 1034347
(43) Veröffentlichungstag der Anmeldung: 02.11.2005
(73) Patentinhaber: Ericsson AB, 164 80 Stockholm (SE)
(72) Erfinder: FUSS, Michael, Johannes, D-71573 Allmersbach (DE)
(74) Vertreter: Manitz, Finsterwald & Partner GbR
(86) Internationale Anmeldenummer: PCT/IB2004/000675
(87) Internationale Veröffentlichungsnummer: WO 2004/071031

(56) Entgegenhaltungen:
- US-A1- 2002 049 561

## Beschreibung

Die vorliegende Erfindung betrifft ein Kommunikationsnetz mit einer Mehrzahl von Knoten, von denen wenigstens zwei über wenigstens zwei unterschiedliche Wege verbunden sind, von denen wenigstens einer eine Funkstrecke umfasst, sowie ein Verfahren zur Übertragung eines Datenstroms zwischen diesen zwei Knoten.

Die auf einer solchen Funkstrecke erreichbare Datenrate hängt von Umwelteinflüssen, insbesondere vom entlang der Funkstrecke herrschenden Wetter ab. In der Vergangenheit wurden daher zwischen den Knoten von Fernmeldenetzen in erster Linie leitungsgebundene, von witterungseinflüssen unabhängige Übertragungsstrecken eingesetzt. Die Übertragungsrate einer solchen leitungsgebundenen Übertragungsstrecke ist unter normalen Betriebsbedingungen unveränderlich; im Störungsfalle, etwa bei einer Störung eines angeschlossenen Knotens oder einer physischen Unterbrechung der Strecke, ist keine Übertragung möglich.

Wenn in einem solchen Fernmeldenetz vereinzelt Funkstrecken für die Übertragung zwischen zwei Knoten eingesetzt werden, so muss auch für diese Funkstrecken eine Übertragungsrate mit hoher Ausfallsicherheit garantiert werden können. Daher kann nur ein sehr robuster Übertragungsmodus auf der Funkstrecke verwendet werden, um sicherzustellen, dass die Funkstrecke mit hinreichender Zuverlässigkeit mit der benötigten Datenrate zur Verfügung steht. Je höher die Anforderungen an die Ausfallsicherheit sind, umso kleiner ist der prozentuale Anteil der Betriebszeit, in der ein solcher robuster Modus tatsächlich erforderlich ist. Während eines ganz überwiegenden Teils der Betriebszeit könnte auch mit einem weniger robusten Modus und einer entsprechend höheren Datenrate gearbeitet werden. D.h. die erreichbare Datenübertragungsrate auf einer solchen Funkstrecke ist meist höher als die tatsächlich genutzte Rate.

In US 6 330 278 B1 wird als Anfangs- und Endpunkt für eine Funkstrecke ein Modem vorgeschlagen, das in der Lage ist, die Qualität der Übertragung auf der Funkstrecke zu beurteilen und den auf der Funkstrecke verwendeten Übertragungsmodus der erfassten Übertragungsqualität dynamisch anzupassen. Ein solches Modem ist geeignet für die Übertragung von nicht zeitkritischen Daten, bei deren Übertragung im Falle von schlechten Übertragungsbedingungen auf der Funkstrecke Verzögerungen hingenommen werden können. Wenn ein solches Modem jedoch eingesetzt wird, um zeitkritische Daten wie etwa Telefonie- oder Videodaten zu übertragen, und die Datenrate auf der Funkstrecke wegen einer Verschlechterung der Übertragungsbedingungen verringert werden muss, so führt dies zu Übertragungsstörungen bzw, zu einem Abreißen der Verbindung.

US2002/0049561 offenbart ein Verfahren zum Festlegen von Kostenmetriken in einem drahtlosen Computernetz, bei dem, wenn eine Metrik eines alternativen Weges zu günstigeren Kosten führt, ein Datenstrom vollständig über den alternativen Weg umgeleitet wird.

Aufgabe der vorliegenden Erfindung ist, ein Kommunikationsnetz mit wenigstens einer Funkstrecke zwischen zwei über unterschiedliche Wege verbundenen Knoten zu schaffen, bei dem die Übertragungsrate der Funkstrecke variabel ist und das dennoch zur Übertragung von Daten mit garantierter Datenrate geeignet ist.

Die Aufgabe wird gelöst durch ein Kommunikationsnetz mit den Merkmalen des Anspruchs 1. Die Mittel zum Verteilen des Datenverkehrs erlauben im Falle einer Abnahme der Übertragungskapazität der Funkstrecke aufgrund verschlechterter Bedingungen eine Verlagerung eines Teils eines zuvor auf der Funkstrecke übertragenen Datenverkehrs auf den zweiten Übertragungsweg, wodurch die Datenrate auf der Funkstrecke an die momentane Übertragungskapazität angepasst wird und eine Verstopfung der Funkstrecke durch auf Übertragung wartende Daten vermieden wird. Kritische Verzögerungen des weiterhin auf der Funkstrecke übertragenen Datenverkehrs werden vermieden, so dass darin enthaltene zeitkritische Daten weiterhin rechtzeitig übertragen werden.

Auch bei auf den zweiten Übertragungsweg verlagerten Daten treten keine kritischen Verzögerungen auf, sofern auf diesem zweiten Weg ausreichende Übertragungskapazität frei ist.

Vorzugsweise setzt sich der über die Funkstrecke übertragene Datenverkehr aus einem Teilstrom mit garantierter Datenrate und einem Teilstrom mit nicht garantierter Datenrate, z.B. in Form von Dateiübertragungen, Internetzugriffen etc., zusammen. Dann wird der verlagerte Teil des Datenstroms bevorzugt aus dem Teilstrom mit nicht garantierter Rate gebildet. Das heißt, falls Daten mit garantierter Rate in dem verlagerten Teil enthalten ist, so ist deren Anteil am verlagerten Teil auf jeden Fall geringer als an dem weiterhin auf der Funkstrecke übertragenen Teil des Datenstroms.

Vorzugsweise werden nur dann Daten aus dem Teilstrom mit garantierter Rate auf den zweiten Weg verlagert, wenn die Übertragungsrate des für die Funkstrecke festgelegten Modus kleiner als die des Teilstroms mit festgelegter Rate ist, dieser also nicht mehr vollständig auf der Funkstrecke übertragen werden kann.

In dem Teildatenstrom mit nicht festgelegter Rate ist es wiederum sinnvoll, zwischen zeitkritischen Daten wie etwa komprimierten Telefonie- oder Videodaten einerseits und nicht zeitkritischen Daten andererseits zu unterscheiden und den verlagerten Teil des Datenstroms bevorzugt aus dem Anteil der nicht zeitkritischen Daten zu bilden.

Auf diese Weise werden Übertragungsfehler vermieden, die resultieren könnten, wenn sich herausstellt, dass eine maximal zulässige Verzögerung für die verlagerten Daten auf dem zweiten Weg nicht gewährleistet werden kann.

Wenn auch die Übertragungsqualität des zweiten Weges nicht ausreicht, um den Datenverkehr zu bewältigen, kann der auf den zweiten Weg verlagerte Datenstrom insoweit verworfen werden, wie keine Übertragungskapazität auf dem zweiten Weg zur Verfügung steht. Dies kann auf einfache Weise mit Hilfe eines Pufferspeichers geschehen, in dem der auf den zweiten Weg verlagerte Datenstrom vor der Übertragung auf dem zweiten Weg zwischengespeichert wird und dessen Inhalt unabhängig davon, ob er übertragen worden ist oder nicht, zyklisch überschrieben wird.

Um den verwendeten Übertragungsmodus laufend an die Übertragungsbedingungen der Funkstrecke anpassen zu können, kann die Übertragungsqualität am Empfänger, z.B. anhand einer Bitfehlerrate, gemessen und an den Sender gemeldet werden.

Wenn die Funkstrecke bidirektional ist und davon ausgegangen werden kann, dass die Übertragungequalität in beiden Übertragungsrichtungen gleich ist, kann die Übertragungsqualität der Funkstrecke auch einfach am Ort des Senders an einem in Gegenrichtung übertragenen Signal gemessen werden.

Die Funkstrecke kann eine Punkt-zu-Punkt oder auch eine Punkt-zu-Mehrpunkt-Verbindung sein. Bei Punkt-zu-Mehrpunkt-Betrieb zwischen einer Zentrale und mehreren Außenstationen muss der Sender der Zentrale Zugriffssteuerinformationen an die Außenstationen übertragen, um diesen Zeitpunkte zu signalisieren, zu denen sie an die Zentrale übertragen dürfen. Wenn der Sender einer solchen Zentrale jedoch im Punkt-zu-Punkt-Betrieb eingesetzt wird, ist die Übertragung von Zugriffssteuerinformationen überflüssig, so dass die hierfür nicht in Anspruch genommene Übertragungsbandbreite genutzt werden kann, um Nutzdaten zu übertragen.

Vorzugsweise werden auf der Funkstrecke zwischen Sender und Empfänger ATM-Zellen ohne eine übergeordnete Rahmenstruktur übertragen. Dies erleichtert den Wechsel zwischen unterschiedlichen Übertragungsmodi mit jeweils unterschiedlichen für die Übertragung einer Zelle benötigten Zeitdauern.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: eine schematische Darstellung eines erfindungsgemäßen Funkkommunikationssystems, das die veränderlichen Übertragungsraten der Funkstrecken zwischen den Knoten veranschaulicht;
- Fig. 2: ein Blockdiagramm eines Knotens des Funkkommunikationssystems;
- Fig. 3: eine exemplarische Darstellung von Übertragungsmodi und Auslastungen der Funkstrecken zu einem Zeitpunkt;
- Fig. 4: die Auslastungen der Funkstrecken bei gegenüber der Situation von Fig. 2 verschlechterten Übertragungsbedingungen einer Funkstrecke; und
- Fig. 5: die Auslastungen der Funkstrecken bei nochmals verschlechterten Übertragungsbedingungen.

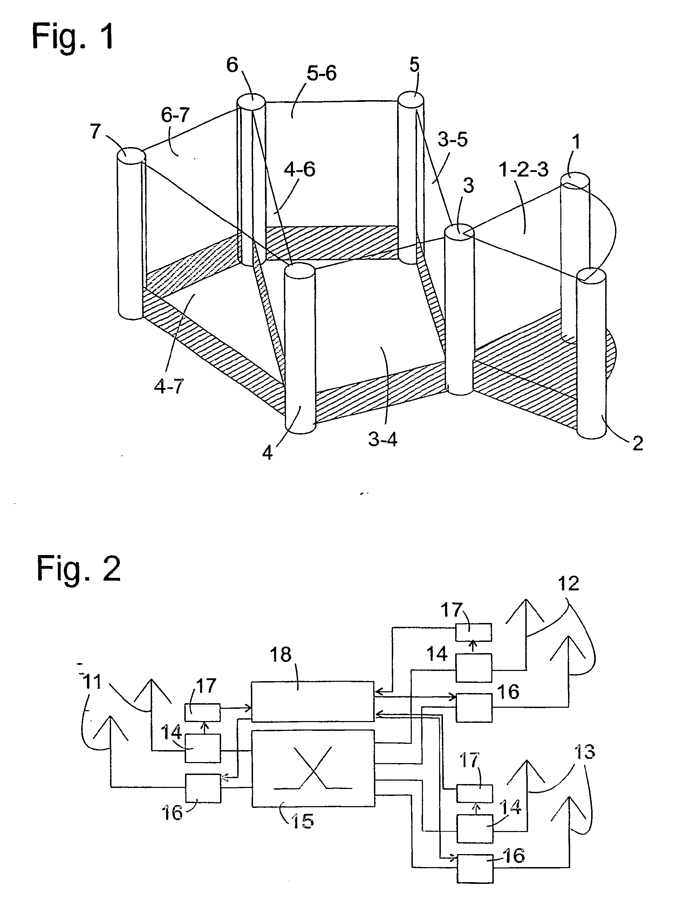

Fig. 1 ist eine stark schematisierte Darstellung eines erfindungsgemäßen Funkkommunikationsnetzwerks. Knoten des Netzwerks sind durch zylindrische Säulen 1 bis 7 symbolisiert. Zwischen den Knoten 3 bis 7 verlaufen Punkt-zu-Punkt-Funkstrecken i-j, wobei i, j jeweils die Bezugszeichen der an der Funkstrecke beteiligten Knoten sind. Jede Richtfunkstrecke i-j umfasst zwei aufeinander ausgerichtete eng gebündelte Antennen an den Knoten i, j, deren Öffnungswinkel jeweils so festgelegt ist, dass sie nur die Antenne des jeweiligen Partnerknotens erreicht. Die Punkt-zu-Punkt-Funkstrecken sind in der Figur durch im oberen Bereich transparente, im unteren Bereich schraffierte Bänder zwischen den Knoten dargestellt.

Zwischen den Knoten 1, 2 und 3 ist eine Punkt-zu-Mehrpunkt-Funkstrecke aufgebaut durch eine Sektorantenne am Knoten 3, die beide Knoten 1, 2 gleichzeitig erreichen kann, und gebündelte, auf den Knoten 3 ausgerichtete Antennen an den Knoten 1 und 2. Die Punkt-zu-Mehrpunkt-Funkstrecke ist symbolisiert durch eine zylindersegmentartige Gestalt 1-2-3, deren Scheitel der Knoten 3 bildet und die ebenfalls im oberen Bereich transparent und im unteren Bereich schraffiert ist.

Fig. 2 zeigt die Struktur eines solchen Knotens am Beispiel des Knotens 3. Der Knoten hat drei Antennen 11 bis 13, darunter zwei gebündelte Antennen 11, 12, die Teil der Funkstrecken 3-4 bzw. 3-5 sind, und eine Sektorantenne 13, die zur Funkstrecke 1-2-3 gehört. An jede Antenne sind ein Empfänger 14, der über die Antenne empfangene ATM-Zellen demoduliert, decodiert und an eine Vermittlungsmatrix 15 weitergibt, und ein Sender 16 angeschlossen, der von der Vermittlungsmatrix 15 empfangene Zellen codiert, moduliert und auf die Antenne gibt. Eine Überwachungsschaltung 17 ist jedem Empfänger 14 zugeordnet, die Leitweginformation und Übertragungsfehlerraten aus den empfangenen Zellen extrahiert und an eine Steuerschaltung 18 weitergibt. Diese legt anhand der Leitweginformation einen Weg für jede Zelle fest und steuert die Vermittlungsmatrix 15 an, um jede Zelle auf dem für sie festgelegten Weg weiterzubefördern.

Die Sender 16 und Empfänger 14 der Knoten 1 bis 7 unterstützen sämtlich eine Mehrzahl von Übertragungsmodi, die sich durch Modulation und/oder Codierung unterscheiden und unterschiedliche Datenraten und Robustheiten aufweisen.

Wenn eine gleiche Frequenz für Übertragung in beide Richtungen auf einer Funkstrecke zwischen zwei Knoten genutzt wird, ist die Übertragungsqualität für beide Richtungen gleich, und es genügt, dass eine der zwei an der Funkstrecke beteiligten Übertragungsschaltungen 17 der Knoten die Übertragungefehlerrate erfasst und anhand dieser einen geeigneten Übertragungsmodus für die Funkstrecke festlegt. Es ist aber auch möglich, dass beide Überwachungsschaltungen unabhängig voneinander einen Übertragungsmodus festlegen, wobei dann vorzugsweise der jeweils robustere für die Übertragung in beide Richtungen verwendet wird.

Die Festlegung eines Übertragungsmodus anhand der Fehlerrate erfolgt, indem die Überwachungsschaltung die gemessene Übertragungsfehlerrate mit einer vorgegebenen Höchstgrenze und einer Untergrenze vergleicht.

Wenn die Fehlerrate die Höchstgrenze überschreitet bzw. die Untergrenze unterschreitet, wählt die Überwachungsschaltung 17 den nächstrobusteren bzw. weniger robusten Übertragungsmodus unter den unterstützten Modi aus.

Eine alternative Möglichkeit, den Übertragungsmodus festzulegen, ist, immer dann zu einem robusteren Übertragungsmodus zu wechseln, wenn die zulässige Höchstgrenze der Fehlerquote überschritten wird, einen weniger robusten Modus aber nur dann zu wählen, wenn Bedarf nach mehr Übertragungskapazität besteht, als der gegenwärtig verwendete Modus hat und der Wechsel zu dem weniger robusten Modus nicht zu einer Fehlerrate über der Höchstgrenze führt.

Wenn auf der Funkstrecke für Übertragung in unterschiedliche Richtungen verschiedene Frequenzen eingesetzt werden, können die Übertragungsqualitäten für die Richtungen unterschiedlich sein. Die Festlegung eines Übertragungsmodus findet dann wie oben beschrieben statt, allerdings unabhängig voneinander an den zwei Überwachungsschaltungen 17, und jede Überwachungsschaltung sendet einen Befehl zum Verwenden des von ihr festgelegten Modus an den Knoten, der das entgegengesetzte Ende der Funkstrecke bildet.

Die Höhe der Bänder i-j bzw. der Gestalt 1-2-3 in Fig. 1 ist ein Maß für die höchste Datenrate, die mit dem schnellsten unterstützten Übertragungsmodus auf der betreffenden Übertragungsstrecke erreichbar ist. Im hier betrachteten Beispiel ist sie als für alle Übertragungsstrecken gleich angenommen, aber dies ist selbstverständlich nicht zwingend. Je nach Grad des technischen Ausbaus kann sich die Zahl der unterstützten Übertragungsmodi und die maximale Datenrate unterscheiden. Die Höhe des schraffierten Bereichs ist jeweils ein Maß für die Nenndatenrate der Funkstrecke, das heißt für eine Datenrate, die mit einer an Sicherheit grenzenden Wahrscheinlichkeit 100%-ε erreicht werden kann. Auch diese ist hier der Einfachheit halber als für alle Funkstrecken gleich angenommen, könnte aber auch unterschiedlich sein. Die Knoten kommunizieren auf den Funkstrecken mit Hilfe von ATM-Zellen, deren Zahl pro Zeiteinheit je nach verwendetem Übertragungsmodus variiert.

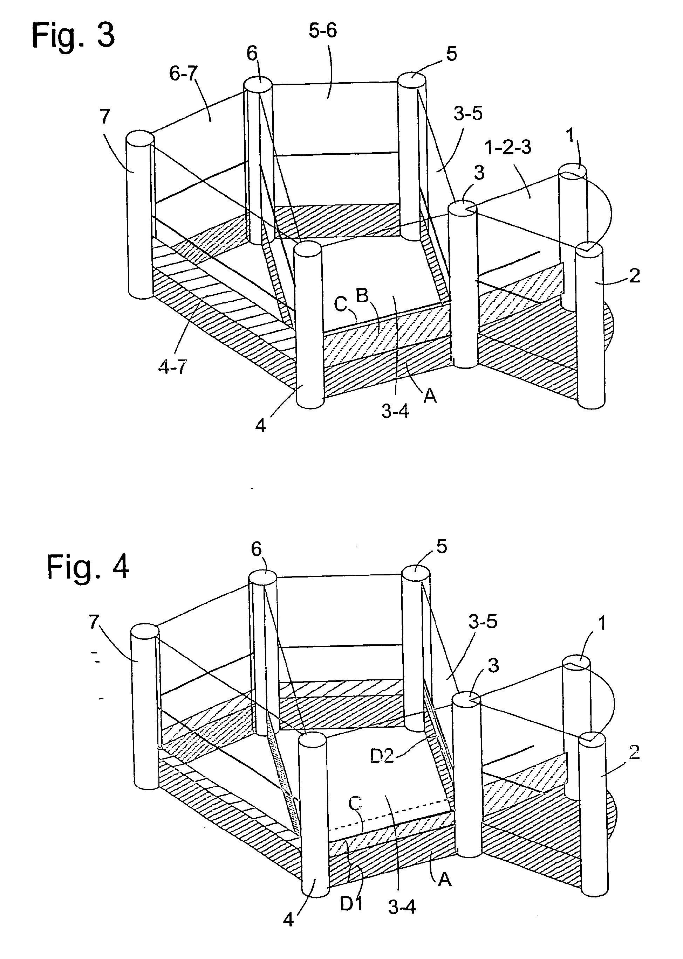

Fig. 3 veranschaulicht das Kommunikationssystem aus Fig. 1 in einer praktischen Anwendungssituation. Zwischen Knoten i, j = 1,2,...7 gezogene fette Linien veranschaulichen jeweils die maximale Datenrate, die auf der Funkstrecke i-j unter den aktuellen Witterungsbedingungen erreichbar ist. Bei den Punkt-zu-Punkt-Funkstrecken ist diese Datenrate natürlich an beiden Enden der Funkstrecke die gleiche; bei der Punkt-zu-Mehrpunkt-Funkstrecke 1-2-3 setzt sich die Nenndatenrate am Knoten 3 aus Beiträgen des Verkehrs zwischen 2 und 3 bzw. 1 und 3 zusammen, die in der Summe durch die Nenndatenrate begrenzt und im Einzelnen je nach Bedarf der Knoten 1, 2 variabel sind. Um diesen Sachverhalt zu symbolisieren, sind die fetten Linien zwischen den Knoten 3 und 1 bzw. 3 und 2 nicht durchgezogen.

Es wird angenommen, dass die Nenndatenrate aller Funkstrecken durch Datenverkehr A mit fester, zugesicherter Rate ausgelastet ist. Die Übertragungsbedingungen sind auf allen Funkstrecken jedoch so gut, dass bei Verwendung eines angepassten Übertragungsmodus deutlich mehr als die Nenndatenrate übertragen werden kann. Durch die fortlaufende Überwachung der Übertragungsqualität der Funketrecken an den Knoten und die dynamische Anpassung des Übertragungsmodus an die Qualität stehen auf den Funkstrecken i-j jeweils Datenraten proportional zur Höhe der in die entsprechenden Funkstrecken eingezeichneten fetten Linien zur Verfügung. Die über die Nenndatenrate hinausgehende Zusatzkapazität kann im Prinzip zur Übertragung beliebiger Arten von Datenverkehr genutzt werden, vorzugsweise wird sie allerdings für Datenverkehr eingesetzt, für den keine feste Datenrate zugesichert werden muss, wie etwa komprimierte Audio- oder Videodaten, Dateitransfers, Kommunikation mit dem Internet etc.

Der Einfachheit halber ist in Fig. 3 angenommen, dass Verkehr ohne zugesicherte Datenrate B nur am Knoten 1 erzeugt, über die Knoten 3 und 4 befördert und am Knoten 7 terminiert wird; in der Praxis wird derartiger Verkehr im Allegemeinen an allen Knoten mit unterschiedlichen Raten erzeugt und terminiert. Der Datenverkehr ohne zugesicherte Datenrate vom Knoten 1 zum Knoten 7 ist in Fig. 3 jeweils durch grob schraffierte Bänder B auf den Funkstrecken 1-2-3, 3-4 und 4-7 symbolisiert.

Von den diversen an der Übertragung beteiligten Funkstrecken hat in diesem Beispiel die Strecke 3-4 die schlechtesten Übertragungsbedingungen, doch ist ihre Kapazität immer noch ausreichend, um sowohl den Datenverkehr A mit zugesicherter Rate als auch den Verkehr B mit nicht zugesicherter Rate zu bewältigen, wie durch den geringen Abstand zwischen den zwei schraffierten Bändern und der fetten Linie dieser Funkstrecke dargestellt. Diesem Abstand entsprechende ungenutzte Kapazität wird mit Füllzellen aufgefüllt.

Fig. 4 zeigt eine Situation, bei der die Übertragungsbedingungen auf der Funkstrecke 3-4 verschlechtert sind, so dass ein Übertragungsmodus verwendet werden muss, dessen Übertragungsrate geringer ist als die des in der Situation der Fig. 3 übertragenen Gesamtverkehrs A+B. In dieser Situation wird der eigentlich auf der Funkstrecke 3-4 zu übertragende Verkehr A+B aufgeteilt in einen ersten Teilstrom D1, dessen Rate der Übertragungsrate des aktuell verwendeten Modus auf der Funkstrecke 3-4 entspricht und der weiterhin auf der Strecke 3-4 übertragen wird, und einen zweiten Teilstrom D2, für den ein neuer Weg vom Knoten 3 zum Knoten 7 gesucht werden muss.

Da das Suchen eines neuen Übertragungsweges Zeit in Anspruch nehmen kann und nicht notwendigerweise gewährleistet ist, dass ein solcher Weg existiert, wird dem zweiten Teilstrom D2, soweit möglich, nur Verkehr ohne zugesicherte Rate zugeschlagen, bei dem Übertragungsverzögerungen tolerierbar sind. Störungen des Verkehrs mit zugesicherter Rate sind dadurch ausgeschlossen, so lange die auf einer Funkstrecke momentan erreichbare Datenrate nicht unter die Nenndatenrate abfällt.

Sofern in dem Datenverkehr mit nicht zugesicherter Rate eine Unterscheidung zwischen zeitkritischem Verkehr wie etwa komprimierten Audio-/Videodaten und nicht zeitkritischem Verkehr wie Datentransfer und Internetkommunikation möglich ist, so ist es in erster Linie der nicht zeitkritische Verkehr, der dem zweiten Teilstrom D2 zugeschlagen wird. Zeitkritischer Verkehr wird nur dann in den zweiten Teilstrom D2 verlagert, wenn die Verlagerung des nicht zeitkritischen Verkehrs nicht ausreichend ist, um die Datenrate auf der Verbindung 3-4 auf das im aktuellen Übertragungsmodus übertragbare Maß zu reduzieren.

Im hier betrachteten Beispiel wird für den zweiten Teilstrom D2 ein Ersatzübertragungsweg über die Knoten 5 und 6 gefunden. Die Kapazität der Funkstrecke 3-5 ist hier knapp ausreichend, um den gesamten verlagerten Verkehr D2 zusätzlich zum ohnehin darauf übertragenen Verkehr mit gesicherter Rate zu übernehmen.

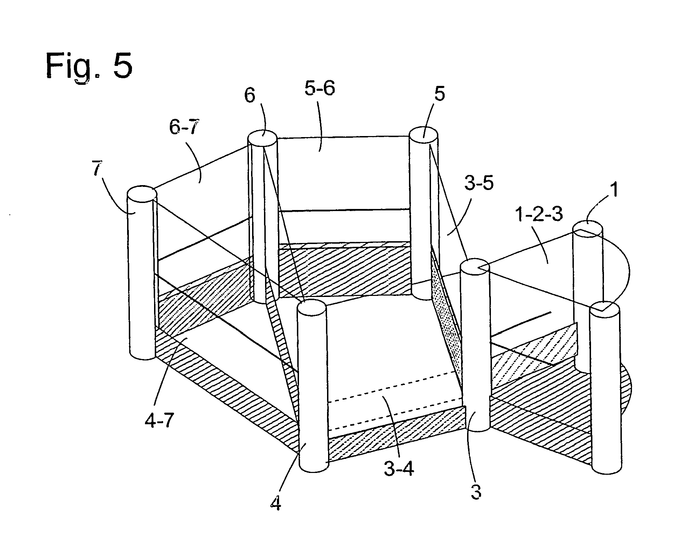

Fig. 5 zeigt die Situation bei abermals verschlechterten Übertragungsbedingungen auf der Funkstrecke 3-4. In der hier betrachteten seltenen Ausnahmesituation ist die dem verwendeten Übertragungsmodus entsprechende Datenrate geringer als die Nenndatenrate der Funkstrecke, so dass auch der Verkehr mit zugesicherter Rate nicht mehr vollständig übertragen werden kann. In dieser Situation ist es erforderlich und unter Berücksichtigung der Übertragungsbedingungen auf den anderen Funkstrecken auch möglich, Verkehr mit zugesicherter Rate, der auf der Funkstrecke 3-4 keinen Platz mehr findet, über die Knoten 5,6 umzulenken. Dadurch erhöht sich der Verkehr mit zugesicherter Datenrate über die Nenndatenrate der Funkstrecken 3-5, 5-6 und 6-7 hinaus, was aber ohne weiteres möglich ist, da diese jeweils Übertragungsmodi mit einer höheren Rate als der Nenndatenrate verwenden. Wie man sieht, wird mit der Erfindung eine effektive Ausfallsicherheit der Funkstrecke 3-4 noch über den ihrer Nenndatenrate entsprechenden Wert 100%-ε hinaus erreicht, da in dem Fall mit der Wahrscheinlichkeit ε, dass die Nenndatenrate auf der Funkstrecke 3-4 nicht eingehalten werden kann, eine Verlagerung von Verkehr immer möglich ist, sofern nicht auch bei sämtlichen zur Verfügung stehenden alternativen Wegen nur die Nenndatenrate übertragbar ist.

Der auf der Funkstrecke 3-5 verwendete, wenig leistungsfähige Übertragungsmodus genügt nun nicht mehr, um den gesamten Datenverkehr zu bewältigen, der auf dieser Strecke übertragen werden müsste, und der sich aus dem bereits unter den Bedingungen der Fig. 3 auf dieser Strecke übertragenen Verkehr und den von der Strecke 3-4 weg verlagerten Verkehr zusammensetzt. Die Funkstrecke 3-5 wird in dieser Situation genauso behandelt, wie zuvor die Strecke 3-4: Für Verkehr, den die Strecke 3-5 nicht zu bewältigen vermag, vorzugsweise für den Verkehr mit nicht zugesicherter Datenrate, wird ein Ausweichweg gesucht, und nur wenig Verkehr mit nicht zugesicherter Rate, dargestellt als schmaler, grob schraffierter Streifen, wird über die Strecke 3-5 und die darauf folgenden Strecken 5-6, 6-7 übertragen.

Bei dem hier betrachteten Beispiel existiert für den Verkehr, der auf der Strecke 3-5 nicht mehr untergebracht werden kann, kein Ausweichweg. Er wird daher in einem Senderpuffer des Senders 16 des Knotens 3 für den Fall gepuffert, dass kurzfristig Übertragungskapazität auf der Strecke 3-5 frei wird, um ihn dann, wenn auch verzögert, zu übertragen. Der Puffer wird dabei mit den zu sendenden Daten zyklisch überschrieben, so dass Daten, die nicht rechzeitig auf der Strecke 3-5 gesendet werden können, verloren gehen.

Das oben für eine Punkt-zu-Punkt-Funkstrecke beschriebene Prinzip der Verkehrsumleitung bei nicht ausreichender Übertragungskapazität ist auch auf Punkt-zu-Mehrpunkt-Funkstrecken wie 1-2-3 anwendbar. Dabei kann die Festlegung des Übertragungsmodus zwischen den Knoten 1 und 3 unabhängig von der des Übertragungsmodus zwischen 3 und 2 stattfinden. Dies ist bei Funkstrecken großer Reichweite sinnvoll, bei denen deutliche Unterschiede in den Übertragungsbedingungen zwischen den Knoten 1 und 3 einerseits und 2 und 3 andererseits möglich sind. Einfacher und bei geringer Reichweite der Funkstrecke sinnvoll ist es, einen gleichen Übertragungsmodus für alle Knoten festzulegen.

Eine Punkt-zu-Mehrpunkt-Funkstrecke ist zur Anbindung von Knoten wie 1, 2 an das Netz sinnvoll, die (noch) ein zu geringes Verkehrsaufkommen haben, um eine Richtfunkstrecke zu rechtfertigen. Wenn das Verkehrsaufkommen dieser Knoten zunimmt, kann am Knoten 3 die Sektorantenne 13 durch eine auf den Knoten 1 ausgerichtete gebündelte Antenne vom gleichen Typ wie die Antennen 11, 12 ersetzt und eine weitere Gruppe aus Sender 16, Empfänger 14, Überwachungsschaltung 17 und Antenne für die Verbindung mit dem Knoten 2 hinzugefügt werden. So können die Anfangsinvestitionen in das Netz gering gehalten werden und seine Leistung kann kontinuierlich dem jeweiligen Bedarf angepasst erhöht werden.

Zellen, die der Knoten 3 auf der Punkt-zu-Mehrpunkt-Funkstrecke überträgt, müssen mit einer Information verknüpft sein, die den Zielknoten 1 oder 2 jeder Zelle festlegt. Dies kann geschehen, indem jede Zelle mit einer Kennung ausgestrahlt wird, die den Zielknoten identifiziert, oder indem Zeitfenster festgelegt werden, in denen nur Zellen für jeweils einen der Knoten ausgestrahlt werden und Information über diese Festlegung an die Knoten 1, 2 übermittelt wird. Bei Umstellung auf eine Punkt-zu-Punkt-Funkstrecke könnte diese Kennung bzw. Information weiter ausgestrahlt werden. Dies würde die Umstellung von Punkt-zu-Mehrpunkt auf Punkt-zu-Punkt-Übertragung besonders einfach machen. Vorteilhafter ist jedoch, diese Kennung bzw. Information nach der Umstellung nicht mehr auszustrahlen und dadurch frei werdende Übertragungskapazität für die Nutzdatenübertragung einzusetzen.

## Patentansprüche

1. Kommunikationsnetz mit einer Mehrzahl von Knoten (1, 2, ..., 7), von denen wenigstens zwei (1, 7) über wenigstens zwei unterschiedliche Wege (1-2-3, 3-4, 4-7; 1-2-3, 3-5, 5-6, 6-7) verbunden sind, von denen wenigstens einer eine von einem Sender zu einem Empfänger verlaufende Funkstrecke (3-4) umfasst, **dadurch gekennzeichnet dass** Sender und Empfänger eine Mehrzahl von Übertragungsmodi mit unterschiedlichen Robustheiten und Datenraten unterstützen und Mittel (17) zum Festlegen des verwendeten Übertragungsmodus in Abhängigkeit von einer erfassten Übertragungsqualität der Funkstrecke (3-4, ...) aufweisen, sowie Mittel zum Verteilen (15, 18) des Datenverkehrs von einem der zwei Knoten (1) zum anderen (7) auf die zwei Wege (1-2-3, 3-4, 4-7; 1-2-3, 3-5, 5-6, 6-7) entsprechend deren Datenraten.

2. Kommunikationsnetz nach Anspruch 1, **dadurch gekennzeichnet, dass** die Funkstrecke (3-4) eine Punkt-zu-Punkt-Verbindung ist.

3. Kommunikationsnetz nach Anspruch 1, **dadurch gekennzeichnet, dass** die Funkstrecke (1-2-3) eine Punkt-zu-Mehrpunkt-Verbindung ist.

4. Kommunikationsnetz nach einem der vorhergehenden Ansprüche, **dadurch gekennzeichnet, dass** die Funkstrecke bidirektional ist.

5. Kommunikationsnetz nach Anspruch 4, **dadurch gekennzeichnet, dass** der Sender (16) wahlweise im Punkt-zu-Punkt- oder im Punkt-zu-Mehrpunkt-Betrieb einsetzbar ist, wobei Bandbreite der Funkstrecke, die im Punkt-zu-Mehrpunkt-Betrieb für die Übertragung von Zugriffssteuerinformation genutzt wird, im Punkt-zu-Punkt-Betrieb für die Nutzdatenübertragung genutzt wird.

6. Kommunikationsnetz nach einem der vorhergehenden Ansprüche, **dadurch gekennzeichnet, dass** Sender (16) und Empfänger (14) für die Übertragung rahmenloser ATM -Zellen ausgelegt sind.

7. Verfahren zur Datenübertragung in einem Kommunikationsnetz, wobei das Netzwerk eine Mehrzahl von Knoten (1,2,...,7) umfasst, von denen wenigstens zwei (1, 7) über zwei unterschiedliche Wege (1-2-3, 3-4, 4-7; 1-2-3, 3-5, 5-6, 6-7) verbunden sind, wobei wenigstens einer der Wege eine von einem Sender zu einem Empfänger verlaufende Funkstrecke (3-4) umfasst, **dadurch gekennzeichnet dass** Sender und Empfänger eine Mehrzahl von Übertragungsmodi mit unterschiedlichen Robustheiten und Datenraten unterstützen, und das Verfahren das Festlegen eines verwendeten Übertragungsmodus anhand einer erfassten Übertragungsqualität der Funkstrecke (3-4) und das Verteilen des Datenstroms (A+B) von einem (1) der zwei Knoten zum anderen (7) auf die zwei Wege entsprechend deren Datenraten umfasst.

8. Verfahren nach Anspruch 7, **dadurch gekennzeichnet, dass** die Verteilung des Datenstroms (A+B) auf die zwei Wege das Übertragen des Datenstroms (A+B) auf der Funkstrecke (3-4) des ersten Weges, soweit die Rate des Datenstroms (A+B) nicht die Datenrate des festgelegten Modus übersteigt, und das Verlagern eines Teils des Datenstroms auf den zweiten Weg, wenn die Rate des Datenstroms (A+B) die Datenrate des festgelegten Modus übersteigt, umfasst

9. Verfahren nach Anspruch 8, **dadurch** gekenntzeichnet, dass wenn der Datenstrom (A+B) sich aus einem Teilstrom (A) mit gesicherter Datenrate und einem Teilstrom (B) mit nicht zugesicherter Datenrate zusammensetzt, der verlagerte Teil (D2) des Datenstroms aus dem Teilstrom (B) mit nicht zugesicherter Rate gebildet wird.

10. Verfahren nach Anspruch 9, **dadurch gekennzeichnet, dass** nur dann Daten aus dem Teilstrom (A) mit zugesicherter Rate verlagert werden, wenn die Übertragungsrate des festgelegten Modus kleiner als die des Teilstroms (A) mit zugesicherter Rate ist.

11. Verfahren nach einem der Ansprüche 9 bis 10, **dadurch gekennzeichnet, dass** wenn der Teildatenstrom (B) mit nicht zugesicherter Rate einen Anteil an zeitkritischen Daten und einen Anteil an nicht zeitkritischen Daten umfasst, der verlagerte Teil (D2) des Datenstroms bevorzugt aus dem Anteil der nicht zeitkritischen Daten gebildet wird.

12. Verfahren nach einem der Ansprüche 7 bis 11, **dadurch gekennzeichnet, dass** der auf den zweiten Weg (1-2-3, 3-5, 5-6, 6-7) verlagerte Datenstrom (D2) insoweit verworfen wird, wie keine Übertragungskapazität auf dem zweiten Weg zur Verfügung steht.

13. Verfahren nach einem der Ansprüche 7 bis 12, **dadurch gekennzeichnet, dass** die Übertragungaqualität eines Weges am Empfänger gemessen und an den Sender gemeldet wird.

14. Verfahren nach einem der Ansprüche 7 bis 12, **dadurch gekennzeichnet, dass** die Funkstrecke bidirektional ist und ihre Qualität am Ort des Senders gemessen wird.

## Claims

1. A communications network, comprising a plurality of nodes (1, 2, ..., 7), of which at least two 1, 7)are connected via at least two different routes (1-2-3, 3-4, 4-7; 1-2-3, 3-5, 5-6, 6-7), of which at least one includes a radio link (3-4) running from a transmitter to a receiver, **characterized in that** the transmitter and the receiver support a plurality of transmission modes with different robustness and data rates and have means (17) for establishing the employed transmission mode in dependence on a deleted transmission quality of the radio link (3-4, ...) and also means (15, 18) for distributing data traffic from one (1) of the two nodes to the other (7) of the two nodes on the two routes (1-2-3, 3-4, 4-7; 1-2-3, 3-5; 5-6, 6-7) in accordance with their data rates.

2. A communications network according to claim 1, **characterized in that** the radio link (3, 4) is a point-to-point connection.

3. A communications network according to claim 1, **characterized in that** the radio link (1-2-3) is a point-to-multipoint connection.

4. A communications network according to any one of the previous claims, **characterized in that** the radio link is bidirectional.

5. A communications network according to claim 4, **characterized in that** the transmitter (16) can be used selectively in point-to-point or point-to-multipoint operation, with bandwidth of the radio link being used in point-to-multipoint operation for the transmission of access control information and in point-to-point operation for useful data transmission.

6. A communications network according to any one of the previous claims, **characterized in that** the transmitter (16) and the receiver (14) are configured to transmit frameless cells.

7. A method for data transmission in a communications network, wherein the network includes a plurality of nodes (1, 2, ..., 7) of which at least two (1,7) are connected via two different routes (1-2-3,3-4,4-7; 1-2-3, 3-5, 5-6, 6-7), wherein at least one of the routes includes a radio link (3 - 4) running from a transmitter to a receiver, **characterized in that** the transmitter and the receiver support a plurality of transmission modes with different robustness and data rates; and **in that** the method includes establishing an employed transmission mode with reference to a detected transmission quality of the radio link (3 - 4) and distributing the data stream (A + B) from one (1) of the two nodes to the other (7) of the two nodes on the two routes in accordance with their data rates.

8. A method according to claim 7, **characterized in that** the distribution of the data stream (A + B) to the two routes includes the transmission of the data stream (A + B) on the radio link (3 - 4) of the first route, provided that the rate of the data stream (A + B) does not exceed the data rate of the established mode, and the transposition of a portion of the data stream to the second route if the rate of the data stream (A + B) exceeds the data rate of the established mode.

9. A method according to claim 8, **characterized in that**, if the data stream (A + B) is composed of a partial stream (A) with an assured data rate and a partial stream (B) with a non-assured data rate, the transposed part (D2) of the data stream is formed from the partial stream (B) with the non-assured rate.

10. A method according to claim 9, **characterized in that** data are only transposed from the partial stream (A) with the assured rate if the transmission rate of the established mode is lower than that of the partial stream (A) with the assured rate.

11. A method according to one of the claims 9 to 10, **characterized in that**, if the partial data stream (B) with non-assured data includes a portion of time-critical data and a portion of non-time-critical data, the transposed portion (D2) of the data stream is respectively formed from the portion of the non-time-critical data.

12. A method according to any one of the claims 7 to 11, **characterized in that** the data stream (D2) transposed to the second route (1, 2, 3, 3-5,5-6, 6-7) is discarded to the extent that no transmission capacity is available on the second route.

13. A method according to any one of the claims 7 to 12, **characterized in that** the transmission quality of a route is measured at the receiver and is reported to the transmitter.

14. A method according to any one of the claims 7 to 12, **characterized in that** the radio link is bidirectional, and its quality is measured at the location of the transmitter.

## Revendications

1. Réseau de communication comprenant une pluralité de noeuds (1,2, ..., 7), parmi lesquels au moins deux noeuds (1, 7) sont reliés via au moins deux voies différentes (1-2-3, 3-4, 4-7 ; 1-2-3, 3-5, 5-6, 6-7), parmi lesquelles au moins une voie comprend une liaison radio (3-4) qui s'étend depuis un émetteur jusqu'à un récepteur,
**caractérisé en ce que** l'émetteur et le récepteur supportent une pluralité de modes de transmission avec différentes robustesses et différents débits de données et comprennent des moyens (17) pour déterminer le mode de transmission utilisé en dépendance d'une qualité de transmission détectée de la liaison radio (3-4, ...), ainsi que des moyens pour répartir (15, 18) le trafic de données depuis l'un des deux noeuds (1) vers l'autre noeud (7) sur les deux voies (1-2-3, 3-4, 4-7 ; 1-2-3, 3-5, 5-6, 6-7) en correspondance de leur débit de données.

2. Réseau de communication selon la revendication 1, **caractérisé en ce que** la liaison radio (3-4) est une liaison de point-à-point.

3. Réseau de communication selon la revendication 1, **caractérisé en ce que** la liaison radio (1-2-3) est une liaison de point-à-multipoints.

4. Réseau de communication selon l'une des revendications précédentes, **caractérisé en ce que** la liaison radio est bidirectionnelle.

5. Réseau de communication selon la revendication 4, **caractérisé en ce que** l'émetteur (16) peut être utilisé au choix en service de point-à-point ou en service de point-à-multipoints, et la largeur de bande de la liaison radio qui est utilisée lors du service de point-à-multipoints pour la transmission d'informations de commande d'accès est utilisée lors du service de point-à-point pour la transmission de données utiles.

6. Réseau de communication selon l'une des revendications précédentes, **caractérisé en ce que** l'émetteur (16) et le récepteur (14) sont conçus pour la transmission de cellules ATM sans trame.

7. Procédé pour la transmission de données dans un réseau de communication, le réseau comprenant une pluralité de noeuds (1, 2, ..., 7) parmi lesquels au moins deux noeuds (1,7) sont reliés via deux voies différentes (1-2-3, 3-4, 4-7 ; 1-2-3, 3-5, 5-6, 6-7), dans lequel l'une au moins des voies comprend une liaison radio (3-4) qui s'étend depuis un émetteur jusqu'à récepteur,
**caractérisé en ce que** l'émetteur et le récepteur supportent une pluralité de modes de transmission avec différentes robustesses et différents débits de données, et le procédé comprend la détermination d'un mode de transmission utilisé en s'aidant d'une qualité de transmission détectée de la liaison radio (3-4), et la répartition du flux de données (A + B) depuis l'un (1) des deux noeuds vers l'autre (7) sur les deux voies en correspondance de leurs débits de données.

8. Procédé selon la revendication 7, **caractérisé en ce que** la répartition du flux de données (A + B) sur les deux voies comprend la transmission du flux de données (A + B) sur la liaison radio (3-4) de la première voie, tant que le débit du flux de données (A + B) ne dépasse pas le débit de données du mode déterminé, et le déplacement d'une partie du flux de données sur la seconde voie quand le débit du flux de données (A + B) dépasse le débit de données du mode déterminé.

9. Procédé selon la revendication 8, **caractérisé en ce que**, quand le flux de données (A + B) se compose d'un flux partiel (A) avec un débit de données assuré et d'un flux partiel (B) avec un débit de données non assuré, la partie déplacée (B2) du flux de données est formée par le flux partiel (B) avec un débit non assuré.

10. Procédé selon la revendication 9, **caractérisé en ce que** seules des données du flux partiel (A) avec débit assuré sont déplacées quand le débit de transmission du mode déterminé est inférieur à celui du flux partiel (A) avec débit assuré.

11. Procédé selon l'une des revendications 9 à 10, **caractérisé en ce que**, quand le flux de données partiel (B) avec débit non assuré comprend une proportion de données critiques sur le plan temporel et une proportion de données non critiques sur le plan temporel, la partie déplacée (B2) du flux de données est formée de préférence par la proportion des données non critiques sur le plan temporel.

12. Procédé selon l'une des revendications 7 à 11, **caractérisé en ce que** le flux de données (B2) déplacé vers la seconde voie (1-2-3, 3-5, 5-6, 6-7) est rejeté si l'on ne dispose d'aucune capacité de transmission sur la seconde voie.

13. Procédé selon l'une des revendications 7 à 12, **caractérisé en ce que** la qualité de transmission d'une voie est mesurée au niveau du récepteur et est annoncée à l'émetteur.

14. Procédé selon l'une des revendications 7 à 12, **caractérisé en ce que** la liaison radio est bidirectionnelle et sa qualité est mesurée à l'emplacement de l'émetteur.
